# EUROPEAN PATENT SPECIFICATION

(11) **EP 3 688 062 B1**
(45) Date of publication and mention of the grant of the patent: **02.09.2026**
(21) Application number: 18766254.9
(22) Date of filing: 10.09.2018
(51) Int. Cl.: C08G 59/38, C08G 59/40, C08G 59/50, C09J 163/00

(54) **A RESIN COMPOSITION AND MATERIALS CONTAINING A RESIN COMPOSITION**
HARZZUSAMMENSETZUNG UND MATERIALIEN, DIE EINE HARZZUSAMMENSETZUNG ENTHALTEN
COMPOSITION DE RÉSINE ET MATÉRIAUX CONTENANT UNE COMPOSITION DE RÉSINE

(30) Priority: 06.09.2017 GB 201714292; 09.03.2018 GB 201803854
(43) Date of publication of application: 05.08.2020
(73) Proprietor: Hexcel Composites Limited, Duxford, Cambridgeshire CB22 4QB (GB)
(72) Inventor: VERGE, Nicholas, Duxford Cambridgeshire CB22 4QB (GB); HARRINGTON, Chris, Duxford Cambridgeshire CB22 4QB (GB)
(74) Representative: Murgitroyd & Company
(86) International application number: PCT/EP2018/074305
(87) International publication number: WO 2019/048676

(56) References cited:
- EP-A1- 1 780 587
- WO-A1-2014/125044
- US-A- 4 714 648
- DATABASE WPI Week 201418, Derwent World Patents Index; AN 2013-R73180, XP002785738

## Description

### INTRODUCTION

The present invention relates to resin compositions and materials containing resin compositions, particularly but not exclusively to resin compositions containing a first component comprising an epoxy novolac resin and a phenol novolac epoxy resin which differs in structure from the epoxy novolac resin and a second component comprising an epoxy resin that can be used as the curable matrix in the production of moulding compounds, adhesives and prepregs.

### BACKGROUND

Composite materials are produced in many forms. A fibrous layer impregnated with a curable resin matrix composition or resin composition is known herein as a prepreg. Moulding compounds generally comprise a fibrous material in a chopped, isotropic or quasi-isotropic form in combination with a resin matrix composition. The resin matrix compositions in these materials may be uncured or partially cured.

Resin matrix compositions can be selected from a wide range of polymerisable components and additives. Common polymerisable components comprise epoxies, polyesters, vinylester, polyisocyanates, and phenolics. Compositions containing these components are generally referred to as epoxy, polyester, vinylester, polyisocyanate and phenolic compositions respectively.

Epoxy resin compositions are widely used in composite materials. The epoxy components in these compositions are selected from a wide range of epoxy containing materials according to the cure cycle to be employed and the nature of the finished article to be produced. Epoxy resins can be solid, liquid or semi-solid and are characterised by their functionality and epoxy equivalent weight. The functionality of an epoxy resin is the number of reactive epoxy sites per molecule that are available to react and cure to form the cured structure. For example, a bisphenol-A epoxy resin has a functionality of 2, while certain glycidyl amines can have a functionality of more than 4. The EEW is the weight of epoxy resin material in grams containing 1 gram/mol of epoxy groups.

Epoxy resin compositions are generally cured in a mould where fibrous reinforcement, such as carbon fibre, glass fibre, Kevlar and/or aramid fibre, are superimposed to form a lay-up. The systems are then cured in the mould by heating whilst often pressure is also applied.

Although cured epoxy resin composition have desirable mechanical properties, these properties can be further enhanced by including modifiers and additives. For example it is well known to include impact modifiers in the epoxy resin systems in order to enhance their toughness. Typical impact modifiers that have been proposed are thermoplastic materials such as polyamides including nylon 6, nylon 11, nylon 12 and nylon 66, or polyethers, polysulfones and core shell rubbers.

The properties required of a composite material are that when cured it has the desired glass transition temperature (Tg), and also has the desiredmechanical properties according to the use to which it is to be put. In certain applications it is important that the Tg is retained under damp or humid conditions.

Epoxy compositions also include catalysts and/or curatives, and these are also selected according to the nature of the epoxy resin, the product to be produced and the cure cycle that is required.

The curing of composite materials to support high volume manufacturing rates requires very short cure cycles. A cure cycle of 2.5 minutes can provide for rate manufacture of ca. 166000 parts per mould per year (assuming a 30 second unload-re loading time and 95% utilisation). It is desirable to use thermosetting materials for structural components as they have superior mechanical performance and creep resistance compared to thermoplastics. For these applications, the thermosetting matrix must have an initial cured Tg that is high enough to allow demoulding at the cure temperature. A higher cured Tg capability enables curing at higher cure temperature and higher cure temperature will enable faster cure cycles as reactivity increases with temperature.

Very fast cure at lower temperature can be achieved with multi-component mixed epoxy compositions which are prepared and injected into a fibrous preform. However this requires additional mixing and metering equipment which increases the complexity and therefore the occurrence of failures which can be costly in high volume production environments. In addition, these methods require the construction, in an additional prior step, of a dry fibrous preform. This dry preform can be time consuming to produce and difficult to position accurately into the required complex shaped mould. Therefore prepreg materials that contain both the fibrous reinforcement and a curable resin composition are more preferred for structural part manufacture in large volumes. Such materials can be cut, oriented and stacked in automated processes allowing easy placement into the mould for curing.

Curable thermosetting matrix compositions which remain stable (latent) at room temperature (21 °C) and are fast curing at their selected cure temperature, typically use a latent amine curative which is accelerated by a urone based curative. Although effective for initial cure these curatives can result in low and therefore undesired in service Tg temperatures as the latent amine and urone combination is susceptible to high levels of water uptake and matrix plasticization.

Cured epoxy resin compositions when exposed to water at 70°C for 14 days have a retained Tg (referred to as the "wet Tg") of less than 80°C. Attempts to make even faster curing compositions through use of additional curative/accelerator conventionally result in cured resin compositions with a wet Tg of less than 70°C. In both cases the retained wet Tg as a percentage of the initial 'dry' cured Tg is less than 60%. For many Industrial applications for structural components, this performance is inadequate as a wet Tg of greater than 85°C is usually required for load bearing structural components that might be exposed to sunlight, such as vehicle components and aircraft parts.

EP1780587 discloses liquid crystal sealant compositions comprising as essential components (a) epoxy resin, (b) curing agent containing at least one type of each of novolac resin and polyfunctional hydrazide compound, and (c) inorganic filler.

WO2014/125044 discloses epoxy resin formulations comprising a polyfunctional epoxy resin, a phenoxy resin, a fire retardant, a toughener and a curative, and their use in prepregs which are useful in the production of aircraft components.

CN103146334 discloses flame-retardant intermediate-temperature cured epoxy films prepared from bisphenols epoxy resin, reactive diluent, toughened resin, a silane coupling agent, a latent curing agent, a curing accelerator, encapsulated red phosphorous and hydroxide.

US4714648 discloses a prepreg obtained by impregnating fibers with an epoxy resin composition by a hot melt method, wherein the epoxy resin composition comprises components (A), (B), and (C), wherein (A) is an epoxy resin (B) is a hardening agent composition containing a hydrazide type hardening agent for an epoxy resin, and having a melting point of not higher than 160°C, and (B) further contains at least one compound selected from the group consisting of alcohols and phenols having a melting point of not less than 50°C, and (C) is a urea compound having a specified formula.

The present invention aims to obviate or at least mitigate the above described problems and/or to provide improvements generally.

### SUMMARY

According to the inventions there are provided a resin composition, a moulding material and an adhesive as defined in any one of the accompanying claims.

In an embodiment of the invention there is provided a resin composition comprising:
a. a first polyfunctional epoxy component (i) comprising an epoxy novolac resin and a phenol novolac resin which differs in structure from the epoxy novolac resin, and
b. a second component (ii) comprising an epoxy resin,
   the composition further comprising
c. a third component (iii) comprising a hydrazide based curative in combination with either (a) a urone based curative or (b) an imidazole based curative or both.

In an embodiment, this composition provides at least 95% of cure in 2 minutes or less at 170 °C with a dry Tg of over 130 °C and a hot wet Tg (cured sample exposed to water at 70°C for 14 days in short, "wet Tg") of over 100 °C whilst having desired mechanical properties for structural applications.

In an embodiment E' Tg is in the range of from 135 to 145 °C, preferably from 140 to 144°C for the dry Tg and in the range of from 100 to 110 °C, preferably from 100 to 105°C for the wet Tg.

In a further embodiment, the resin composition has a time to peak exotherm enthalpy as measured using DEA in accordance with ASTM D2471 in the range of from .2 to 1.6 mins, preferably from 0.4 to 1.0 minute.

In another embodiment E" Tg is in the range of from 140 to 175 °C, preferably from 140 to 170°C for the dry Tg and in the range of from 105 to 125 °C, preferably from 110 to 120°C for the wet Tg.

The percentage cure (cure %) is measured in accordance with method as described above. The dry Tg is measured in accordance with ASTM E1640 using a ramp rate of 5 °C/min (Standard Test Method for Assignment of the Glass Transition Temperature by Dynamic Mechanical Analysis (DMA) ) and the retained or hot wet Tg is measured following isothermal curing at 170 °C for 2 minutes of the neat resin composition and exposing the cured composition to water at 70°C for 14 days, and then measuring the Tg of the sample using the same measurement standard ASTM E1640 using a ramp rate of 5 °C/min.

The loss modulus E" is measured in accordance with ASTM E1640 using dynamic mechanical analysis (DMA) at a ramp rate of 5°C/min. The hot wet loss modulus E"w is measured using the same standard at a ramp rate of 5°C/min following immersion of the cured composition to water at a temperature of 70 °C for 14 days.

The storage modulus E' is measured in accordance with ASTM E1640 using dynamic mechanical analysis (DMA) at a ramp rate of 5°C/min. The hot wet loss modulus E'w is measured using the same standard at a ramp rate of 5°C/min following immersion of the cured composition to water at a temperature of 70 °C for 14 days.

Corresponding Tg values are derived from the storage and loss moduli for both dry samples and hot wet treated samples as outlined in ASTM E1640.

The average epoxy equivalent weight range of component (i) is in the range of from 120 to 220, preferably from 150 to 215, more preferably from 150 to 200.

In another embodiment, component (ii) is selected from a cycloaliphatic epoxy resin, a bisphenol-A epoxy resin, or a further novolac epoxy resin.

Preferably, the component (ii) comprises a multifunctional epoxy resin derived from polyaddition of a dicyclopentadiene component and phenol component.

In a further embodiment, the composition may comprise additional epoxy resin components. The composition may comprise a component (iv) comprising at least one difunctional epoxy resin. Preferably, the composition comprises one or more difunctional epoxy resin components in the range of from 20 to 55 % by weight, preferably from 25 to 32 % and more preferably from 28 to 41 % by weight based on the total weight of the composition and/or combinations of the aforesaid weight ranges.

Advantageously we have found that for an average epoxy equivalent weight to amine stoichiometric ratio in the range of from 0.86 to 1.29, preferably in the range of from to 1.183 to 0.864 and more preferably from 1.022 to 1.13.

In yet another embodiment, the composition comprises the first component (i) in the range of from 5 to 30% by weight based on the total weight of the composition, preferably from 12 to 25% by weight based on the total weight of the composition.

The composition may comprise the second component (ii) in the range of from 5 to 20% by weight based on the total weight of the composition, preferably from 8 to 10% by weight based on the total weight of the composition.

In another embodiment of the invention, the component (iii) is in the range of from 12 to 20% by weight based on the total weight of the composition.

In a further embodiment, the hydrazide based curative is a dihydrazide curative and wherein preferably the urone based curative (a) is selected from phenyl ureas. We have discovered that the combination of a dihydrazide curative, a urone based curative comprising a phenyl urea and cycloaliphatic epoxy resins result in a fast curing composition which has a cured Tg of over 130°C when cured at temperatures over 170 °C and a retained Tg (or wet Tg) of over whilst the cured loss modulus E" is at values over 130°C and the hot wet loss modulus E"w is at values over 120°C.

In an optional embodiment, the composition may comprise an additional curative in the form of an imidazole curative. Alternatively, the urone based curative may be substituted by an imidazole curative.

However in a preferred embodiment no imidazole is present in the composition.

In another embodiment of the invention there is provided a moulding material comprising a resin composition as hereinbefore described in combination with a fibrous reinforcement material. The fibrous reinforcement material may be provided in differed forms: as a woven fabric or a multi-axial fabric to form a prepreg, as individual fiber tows for impregnation with the resin composition to form towpregs, or as chopped fibers, short fibers or filaments to form a moulding compound.

In a further embodiment of the invention there is provided an adhesive comprising a composition as defined in any of preceding claims in combination with at least one filler.

### SPECIFIC DESCRIPTION

The resin composition as described herein contains a first polyfunctional epoxy component (i) comprising an epoxy novolac resin and a phenol novolac epoxy resin which differs in structure from the spoxy novolac resin, a second component (ii) comprising an epoxy resin and a combination of a dihydrazide curative and a urone based curative. Preferably, the urone based curative comprises an aryl urea or an alkyl-aryl urea; and more preferably, the urone based curative comprises a phenyl urea.

The composition is capable of fast curing whilst the Tg, retained Tg and mechanical properties enable use of this in Industrial structural applications particularly automotive structural applications.

### Curatives

The urone based curative may be selected from 1,3-diphenylurea, benzylurea, 1,1-dimethyl-3-phenylurea, N-ethylurea, N-(2-Chloro-4-pyridyl)-N'-phenylurea, N,N'-dibenzylurea, N-(4-chlorophenyl) N,N-dimethyl urea, N-(4-chlorophenyl) n, n-Dimethyl urea, N-phenyl-N,N-dimethyl urea, 2,4 toluene bis dimethyl urea, 2,4 toluene bis dimethyl urea, cycloaliphatic bisurea, toluene bis dimethyl urea, 4,4' methylene bis (phenyl dimethyl urea), N,N-dimethyl-N'-[3-(trifluoromethyl)phenyl]-urea, 3-(3,4-dichlorophenyl)-1,1-dimethylurea and/or combinations of the aforesaid ureas. In a preferred embodiment, the urone based curative is 1,1-dimethyl-3-phenylurea.

The imidazole based curative may be selected from the group consisting of compounds represented by formula (I): 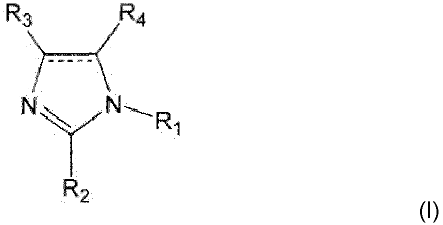 in which R1 represents a hydrogen atom, a C1-C10 alkyl group, an aryl group, an arylalkyl group, or a cyanoethyl group, and R2 to R4 represent a hydrogen atom, a nitro group, a halogen atom, a C1-C20 alkyl group, a C1-C20 alkyl group substituted with a hydroxy group, an aryl group, an arylalkyl group, or a C1-C20 acyl group; and a part with a dashed line represents a single bond or a double bond.

The curative may be selected from one or more of the following imidazoles including 2-ethyl-4-methylimidazole, 1-methylimidazole, 2-methylimidazole, 4-methylimidazole, 1-benzyl-2-methylimidazole, 2-heptadecylimidazole, 2-undecylimidazole, 2-phenyl-4-methyl-5-hydroxymethylimidazole, 2-phenylimidazole, 2-phenyl-4-methylimidazole, 1-benzyl-2-phenylimidazole, 1,2-dimethylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, and 2-phenyl-4,5-dihydroxymethylimidazole, and imidazole, 2-ethyl-4-methylimidazole, 1-methylimidazole, 2-methylimidazole, 4-methylimidazole, 1-benzyl-2-methylimidazole, 2-heptadecylimidazole, 2-undecylimidazole, 1,2-dimethylimidazole, 2-phenyl-4-methyl-5-hydroxymethylimidazole, 2-phenylimidazole, 2-phenyl-4,5-dihydroxymethylimidazole, imidazolines including 2-methylimidazoline, 2-phenylimidazoline, 2-undecylimidazoline, 2-heptadecylimidazoline, 2-ethylimidazoline, 2-isopropylimidazoline, 2,4-dimethylimidazoline, and 2-phenyl-4-methylimidazoline, and 2-methylimidazoline or 2-phenylimidazoline, 1-isopropyl-2-methyl imidazole, 1-(2-hydroxypropyl)-2-methylimidazole, isopropyl-2-aryl imidazole, 1-isopropyl-2-aryl imidazoline and/or combinations of the aforesaid imidazoles.

The hydrazide based curative may be a dihydrazide having the following chemical structure:

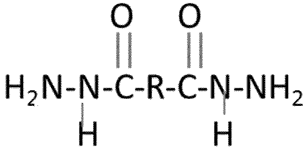

Wherein R comprises (-CH₂-)ₙ or (-Ar-); wherein n is a number from 0 to 10; and wherein Ar is an aromatic ring.

Preferably, the hydrazide curative comprises at least one compound selected from the group consisting of: an aromatic hydrazide, an aliphatic hydrazide, and any combination thereof.

The hydrazide curative may be selected from the group consisting of: adipic dihydrazide, adipic acid dihydrazide, 3, 4-diaminobenzhydrazide, succinic dihydrazide, 4-aminobenzoic hydrazide, (+)-biotinamidohexanoic acid hydrazide, oxalyldihydrazide, maleic hydrazide, dodecanoic acid dihydrazide, isophthalic acid dihydrazide, 1 ,4-cyclohexyl dihydrazide, 4,4'-(propane-1,3-diylbisoxy) dibenzoic dihydrazide, terephthalic acid dihydrazide, isophthalic dihydrazide, and/or any combination thereof.

Various additives may be included in the composition.

### Impact modifiers

The composition may comprise an impact modifier. Impact modifiers are widely used to improve the impact strength for epoxy resin compositions with the aim to compensate their inherent brittleness and crack propagation. Impact modifiers may comprise rubber particles such as CTBN rubbers (carboxyl-terminated butadiene-acrylonitrile) or core shell particles which contain a rubber or other elastomeric compound encased in a polymer shell. The advantage of core shell particles over rubber particles is that they have a controlled particle size of the rubber core for effective toughening and the grafted polymer shell ensures adhesion and compatibility with the epoxy resin composition. Examples of such core shell rubbers are disclosed in EP0985692 and in WO 2014062531.

Alternative impact modifiers may include methylacrylate based polymers, polyamides, acrylics, polyacrylates, acrylate copolymers, and polyethersulphones.

### Fillers

In addition the composition may comprise one or more fillers to enhance the flow properties of the composition. Suitable fillers may comprise talc, microballoons, flock, glass beads, silica, fumed silica, carbon black, fibers, filaments and recycled derivatives, and titanium dioxide.

Importantly, and preferably, a phenoxy polymer component is absent in the composition of the present invention. We have found that the absence of a phenoxy polymer component results in the achievement of the desired E' Tg, E" Tg (for both dry and hot wet treated samples) whilst also providing a composition with advantageous fast cure properties when cured at temperatures of over 120 °C, preferably at 170 °C. This renders the composition of the present invention particularly suitable for applications in compression moulding and for high volume production of compression moulded parts.

To measure the degree of cure using Digital Scanning Calorimetry the heat released during the curing reaction is related to the total heat for fully curing. This can be measured as follows. A reference resin composition sample is heated from 10° C to 250° C at 10° C/min rate to full cure (100%) and the generated heat ΔHi is recorded. The degree of cure of a particular resin sample of the same composition as the reference resin composition sample can then be measured by curing the composition sample to the desired temperature and at the desired rate and for the desired time by heating the sample at these conditions and measuring the heat ΔHe generated by this cure reaction. The degree of cure (Cure %) is then defined by: $Cure % = \left[\left(ΔHi-ΔHe\right)/ΔHi\right] \times 100 \left[%\right]$ where ΔHi is the heat generated by the uncured resin heated from 10° C up to fully cured at 250° C and ΔHe is the heat generated by the certain degree cured resin heated up to a desired temperature and rate.

The glass transition temperature for a dry Tg and a hot wet Tg can be derived from both the storage modulus and the loss modulus using dynamic mechanical analysis.

In dynamic mechanical analysis (DMA) a resin composition sample being probed is subjected to a time-varying deformation and the sample response is measured. In the DMA experiment, a sinusoidal time-varying strain (controlled deformation) is applied to the sample: $γ = {γ}_{o} sin \left(ω t\right)$

Where γ is the applied strain, yo is the strain amplitude and ω is the frequency.

The DMA instrument measures the resultant stress: $σ = {σ}_{o} sin \left(ω t+δ\right)$

Where σ is the resultant stress, σo is the stress amplitude and δ is the phase angle.

For most resin compositions due to the viscoelastic nature (both viscous component and an elastic component) there is a phase lag due to the contribution of the viscous component called the phase angle. The phase angle is important since it is used to calculate the dynamic moduli.

For small strain amplitudes and time independent polymers (linear viscoelastic regime) the resulting stress can be written in terms of the (dynamic) storage modulus (E') and the (dynamic) loss modulus (E"): $σ = {γ}_{o} \left[E′sin\left(ωt\right)+E"cos\left(ωt\right)\right]$

The storage modulus (E') and the loss modulus (E") can thus be calculated using the following equations derived from (iii): $\begin{matrix}E ′ = \frac{{σ}_{0}}{{γ}_{0}} cos δ \\ E " = \frac{{σ}_{0}}{{γ}_{0}} sin δ\end{matrix}$

A typical DMA experiment is to measure E' and E" as a function of temperature using a precise temperature-controlled oven with a linear heating ramp to the desired end temperature. Typical heating rates are in the range of 2 to 5 °C/minute.

A standard test for assigning the glass transition temperature Tg by DMA is found in ASTM E1640 and is derived from the storage modulus, the loss modulus and from tan δ which is the ratio of the loss and storage moduli: $tan δ = \frac{E "}{E ′}$

From the respective moduli and tan δ diagrams derived by DMA, different glass transition temperatures associated with the storage modulus (E' Tg), the loss modulus (E" Tg) and tan δ ( tan δ Tg ) can be readily identified.

As defined and illustrated in ASTM standard E1640, the Tg can be labeled for a DMA resin composition sample using the following parameters:
E' Tg: Occurs at the lowest temperature and is identified by the intersecting tangents corresponding to a tangent to the storage modulus curve below the transition temperature and a tangent to the storage modulus curve at the inflection point approximately midway through the sigmoidal change associated with the transitions.
E" Tg: Occurs at the middle temperature and is identified as the maximum in the E" curve.
Tan Delta Tg: Occurs at the highest temperature and is identified as the maximum of the tan delta curve.

### EXAMPLES

Embodiments of the invention will now be described by way of example only.

The following constituent components were used in the preparation of the compositions of the Examples.

| Component | Description |
|---|---|
| MY 721 | tetraglycidyl ether based epoxy, average EEW 113 (Huntsman) |
| Epikote 615 | epoxy novolac resin, average EEW 175 (Hexion) |
| DEN 438 | novolac epoxy average EEW 180 (Olin) |
| GT 6071 | bisphenol A epoxy average EEW 457 (Huntsman) |
| GT 7071 | bisphenol A epoxy average EEW 512 (Huntsman) |
| MX153 | core shell rubber dispersed in bisphenol A DER331 of average EEW 269 (Kaneka) |
| DW0137 | carbon black filler (Dow) |
| Epikote 828 | bisphenol A epoxy, average EEW 187(Hexion) |
| ADH | adipic dihydrazide (ACCI) |
| U52 | blend of 2,4 toluene bis dimethyl urea and 2,6 toluene bis dimethyl urea (Alzchem) |
| PDU | phenyl dimethyl urea (ACCI) |
| U500 | 2,4 toluene bis dimethyl urea (Alzchem) |
| 556 | cycloaliphatic epoxy resin, average EEW 252 (Huntsman) |
| 2E4MZ | 2-ethyl-4-methylimidazole (Alzchem) |

In the Examples the following parameters were measured:

| Parameter (unit) | Description |
|---|---|
| Speed of cure (s) | ASTM D2471 - Time to peak and time to 95% cure using Dielectric analysis (DEA) |
| Tg (°C) | Glass transition temperature of cured resin matrix composition, measured from DMA in accordance with standard ASTM E1640 |
| Wet Tg (°C) | immersion of cured resin composition in water at 70 °C for 2 week, Tg measured from DMA according to ASTM E1640 |
| E' Tg (°C) | Tg for dry and hot wet treated samples, determined in accordance with ASTM E1640 at a ramp rate of 5 °C/min and derived from storage modulus E' |
| E" Tg (°C) | for dry and hot wet treated samples, determined in accordance with ASTM E1640 at a ramp rate of 5 °C/min from loss modulus E" |
| E" retention (%) | E" Wet Tg / E" Tg * 100 |
| E' retention (%) | E' Wet Tg / E' Tg * 100 |

Various resin compositions were prepared by heating an novolac epoxy component and subsequently blending in the other epoxy resin components followed by the other constituent components of the compositions as outlined in Table 1.

The compositions for Examples 1 to 5 are set out in the below Table 1. All amounts are weight % based on the total weight of the composition for each composition of each Example.

**Table 1. Compositions for the compositions of Examples 1 to 5**

| **Component** | **Example 1** | **Example 2** | **Example 3** | **Example 4** | **Example 5** |
|---|---|---|---|---|---|
| MY 721 | 5.0 | 10.0 | 10.0 | | |
| 556 | | | | 10.0 | |
| Epikote 615 | 22.0 | 22.0 | 22.0 | 10.0 | 19.0 |
| YDPN638 | 5.0 | 5.0 | 5.0 | 16.5 | 16.5 |
| GT6071 | 20.0 | 10.0 | 5.0 | 15.5 | 15.5 |
| GT7071 | | 5.0 | 10.0 | | |
| MX153 | 20.0 | 20.0 | 20.0 | 19.5 | 19.0 |
| Epikote828 | 14.0 | 14.0 | 14.0 | 14.5 | 15.5 |
| DW0137 | 1.0 | 1.0 | 1.0 | 1.0 | 1.0 |
| ADH | 7.0 | 7.0 | 7.0 | 7.0 | 7.0 |
| U52 | 6.0 | 6.0 | 6.0 | 6.0 | 6.0 |
| UR500 | | | | | |
| 2E4MZ | | | | | 0.5 |

The resin compositions of Examples 1 to 5 were exposed to a temperature of 170 °C and the time to peak exotherm and the time to cure to reach 95% cure were measured. The results are shown in Table 2.

**Table 2. Speed of cure at 170°C**

| **Measurement** | **Example 1** | **Example 2** | **Example 3** | **Example 4** | **Example 5** |
|---|---|---|---|---|---|
| Time to peak (DEA) @ 170 °C (mins) | 0.7 | 0.6 | 0.4 | 1.6 | 0.9 |
| Time to 95% DEA @ 170 °C (mins) | 1.5 | 1.7 | 1.7 | 4.6 | 2.0 |

The Tg and wet Tg were also measured in addition to a number of additional parameters after exposing the compositions to a temperature of 170°C for 3 minutes to cure the compositions.

**Table 3. E'Tg and E"Tg (dry and wet), and E' and E" retention for Examples 1 to 5**

| **Measurement** | **Example 1** | **Example 2** | **Example 3** | **Example 4** | | **Example 5** |
|---|---|---|---|---|---|---|
| *No conditioning - no aging* | | | | | | |
| E' Tg (°C) | 135 | 140 | 141 | 135 | | 143 |
| E" Tg (°C) | 161 | 168 | 167 | 142 | | 148 |

| *Conditioned - 2 weeks immersion in water at* 70 °C | | | | | | |
|---|---|---|---|---|---|---|
| E' Tg (°C) | 100 | 98 | 102 | 100 | | 102 |
| E" Tg (°C) | | | | 110 | | 118 |
| E' retention (%) | 74.1 | 70.0 | 72.3 | 74.0 | | 71.3 |
| E" retention (%) | | | | 77.5 | | 79.7 |

The resin composition of the invention can thus be cured to at least 95% of cure in under 2 minutes at 170 °C (as measured using DSC (Digital Scanning Calorimetry) or DEA (dielectric cure monitoring) ) with a cured Tg of over 130 °C and a hot wet Tg of over 100 °C and can thus provide the desired mechanical properties for structural applications.

## Claims

1. A resin composition comprising
a. a first polyfunctional epoxy component (i) comprising an epoxy novolac resin and a phenol novolac epoxy resin which differs in structure from the epoxy novolac resin , and
b. a second component (ii) comprising an epoxy resin,
the composition further comprising
c. a third component (iii) comprising a hydrazide based curative in combination with either (a) a urone based curative or (b) an imidazole based curative or both.

2. A resin composition according to claim 1, wherein component (ii) is selected from a cycloaliphatic epoxy resin, a bisphenol-A epoxy resin, or a further novolac epoxy resin; and/or wherein component (ii) comprises a multifunctional epoxy resin derived from polyaddition of a dicyclopentadiene component and phenol component.

3. A composition according to claim 1 or claim 2, wherein the composition further comprises a component (iv) comprising at least one difunctional epoxy resin;
and/or wherein the composition further comprises a component (v) comprising an impact modifier;
and/or wherein the composition comprising a component (vi) comprising a filler.

4. A composition according to any of the preceding claims, wherein the average epoxy equivalent weight range of component (i) is in the range of from 120 to 220, preferably from 150 to 210, more preferably from 150 to 200.

5. A composition according to any of the preceding claims, wherein the mixture of epoxy functional components (i) and (ii) comprises an average epoxy equivalent weight stoichiometric ratio of i) to ii) of from from 0.86 to 1.29, preferably in the range of from to 1.183 to 0.864 and more preferably from 1.022 to 1.13.

6. A composition according to any of the preceding claims, wherein the composition comprises the first component (i) in the range of from 5 to 30% by weight based on the total weight of the composition, preferably from 12 to 25% by weight based on the total weight of the composition.

7. A composition according to any of the preceding claims, wherein the composition comprises the second component (ii) in the range of from 5 to 20% by weight based on the total weight of the composition, preferably from 8 to 10% by weight based on the total weight of the composition;
and/or wherein the component (iii) is in the range of from 12 to 20% by weight based on the total weight of the composition.

8. A composition according to any of the preceding claims, wherein the composition comprises one or more difunctional epoxy resin components in the range of from 20 to 55 % by weight based on the total weight of the composition.

9. A composition according to any of the preceding claims, wherein the hydrazide based curative is a dihydrazide curative and wherein preferably the urone based curative (a) is selected from phenyl ureas; and/or wherein the urone based curative is selected from 1,3-diphenylurea, benzylurea, 1,1-dimethyl-3-phenylurea, N-ethylurea, N-(2-Chloro-4-pyridyl)-N'-phenylurea, N,N'-dibenzylurea, N-(4-chlorophenyl) N,N-dimethyl urea, N-(4-chlorophenyl) n, n-Dimethyl urea, N-phenyl-N,N-dimethyl urea, 2,4 toluene bis dimethyl urea, 2,6 toluene bis dimethyl urea, cycloaliphatic bisurea, toluene bis dimethyl urea, 4,4' methylene bis (phenyl dimethyl urea), N,N-dimethyl-N'-[3-(trifluoromethyl)phenyl]-urea, 3-(3,4-dichlorophenyl)-1,1-dimethylurea and/or combinations of the aforesaid ureas.

10. A moulding material comprising a resin matrix comprising the composition as defined in any of the preceding claims and a fibrous reinforcement material.

11. An adhesive comprising a composition as defined in any of claims 1 to 9 in combination with at least one filler.

## Patentansprüche

1. Ein Harzzusammensetzung, beinhaltend
a. eine erste polyfunktionelle Epoxidkomponente (i), beinhaltend ein Epoxid-Novolakharz und ein Phenol-Novolak-Epoxidharz, das sich in der Struktur von dem Epoxid-Novolakharz unterscheidet, und
b. eine zweite Komponente (ii), beinhaltend ein Epoxidharz,
wobei die Zusammensetzung ferner Folgendes beinhaltet:
c. eine dritte Komponente (iii), beinhaltend ein Härtungsmittel auf Hydrazidbasis in Kombination mit entweder (a) einem Härtungsmittel auf Uronbasis oder (b) einem Härtungsmittel auf Imidazolbasis oder beiden.

2. Harzzusammensetzung gemäß Anspruch 1, wobei Komponente (ii) aus einem cycloaliphatischen Epoxidharz, einem Bisphenol-A-Epoxidharz oder einem weiteren Novolak-Epoxidharz ausgewählt ist; und/oder wobei Komponente (ii) ein multifunktionelles Epoxidharz beinhaltet, das aus der Polyaddition einer Dicyclopentadien-Komponente und einer Phenol-Komponente herrührt.

3. Zusammensetzung gemäß Anspruch 1 oder Anspruch 2, wobei die Zusammensetzung ferner eine Komponente (iv) beinhaltet, die mindestens ein difunktionelles Epoxidharz beinhaltet;
und/oder wobei die Zusammensetzung ferner eine Komponente (v) beinhaltet, die einen Schlagzähigkeitsmodifikator beinhaltet;
und/oder wobei die Zusammensetzung eine Komponente (vi) beinhaltend, die einen Füllstoff beinhaltet.

4. Zusammensetzung gemäß einem der vorhergehenden Ansprüche, wobei der durchschnittliche Epoxidäquivalentgewichtsbereich von Komponente (i) in dem Bereich von 120 bis 220, vorzugsweise von 150 bis 210, bevorzugter von 150 bis 200, liegt.

5. Zusammensetzung gemäß einem der vorhergehenden Ansprüche, wobei die Mischung von epoxidfunktionellen Komponenten (i) und (ii) ein durchschnittliches stöchiometrisches Epoxidäquivalentgewichtsverhältnis von i) zu ii) von von 0,86 bis 1,29, vorzugsweise in dem Bereich von bis 1,183 bis 0,864 und bevorzugter von 1,022 bis 1,13, beinhaltet.

6. Zusammensetzung gemäß einem der vorhergehenden Ansprüche, wobei die Zusammensetzung die erste Komponente (i) in dem Bereich von 5 bis 30 Gew.-%, bezogen auf das Gesamtgewicht der Zusammensetzung, vorzugsweise von 12 bis 25 Gew.-%, bezogen auf das Gesamtgewicht der Zusammensetzung, beinhaltet.

7. Zusammensetzung gemäß einem der vorhergehenden Ansprüche, wobei die Zusammensetzung die zweite Komponente (ii) in dem Bereich von 5 bis 20 Gew.-%, bezogen auf das Gesamtgewicht der Zusammensetzung, vorzugsweise von 8 bis 10 Gew.-%, bezogen auf das Gesamtgewicht der Zusammensetzung, beinhaltet; und/oder wobei die Komponente (iii) in dem Bereich von 12 bis 20 Gew.-%, bezogen auf das Gesamtgewicht der Zusammensetzung, liegt.

8. Zusammensetzung gemäß einem der vorhergehenden Ansprüche, wobei die Zusammensetzung eine oder mehrere difunktionelle Epoxidharz-Komponenten in dem Bereich von 20 bis 55 Gew.-%, bezogen auf das Gesamtgewicht der Zusammensetzung, beinhaltet.

9. Zusammensetzung gemäß einem der vorhergehenden Ansprüche, wobei das Härtungsmittel auf Hydrazidbasis ein Dihydrazid-Härtungsmittel ist und wobei vorzugsweise das Härtungsmittel auf Uronbasis (a) aus Phenylharnstoffen ausgewählt ist; und/oder wobei das Härtungsmittel auf Uronbasis aus 1,3-Diphenylharnstoff, Benzylharnstoff, 1,1-Dimethyl-3-phenylharnstoff, N-Ethylharnstoff, N-(2-Chlor-4-pyridyl)-N'-phenylharnstoff, N,N'-Dibenzylharnstoff, N-(4-Chlorphenyl)-N,N-dimethylharnstoff, N-(4-Chlorphenyl)-n, n-Dimethylharnstoff, N-Phenyl-N,N-dimethylharnstoff, 2,4-Toluolbisdimethylharnstoff, 2,6-Toluolbisdimethylharnstoff, cycloaliphatischem Bisharnstoff, Toluolbisdimethylharnstoff, 4,4'-Methylenbis(phenyldimethylharnstoff), N,N-Dimethyl-N'-[3-(trifluormethyl)phenyl]-harnstoff, 3-(3,4-Dichlorphenyl)-1,1-dimethylharnstoff und/oder Kombinationen der vorgenannten Harnstoffe ausgewählt ist.

10. Ein Formmaterial, beinhaltend eine Harzmatrix, beinhaltend die Zusammensetzung, wie in einem der vorhergehenden Ansprüche definiert, und ein faserförmiges Verstärkungsmaterial.

11. Ein Klebstoff, beinhaltend eine Zusammensetzung, wie in einem der Ansprüche 1 bis 9 definiert, in Kombination mit mindestens einem Füllstoff.

## Revendications

1. Une composition de résine comprenant
a. un premier composant époxy polyfonctionnel (i) comprenant une résine époxy novolaque et une résine époxy phénol-novolaque qui diffère par sa structure de la résine époxy novolaque, et
b. un deuxième composant (ii) comprenant une résine époxy,
la composition comprenant en outre
c. un troisième composant (iii) comprenant un durcisseur à base d'hydrazide en combinaison avec soit (a) un durcisseur à base d'urone, soit (b) un durcisseur à base d'imidazole, soit les deux.

2. Une composition de résine selon la revendication 1, où le composant (ii) est choisi parmi une résine époxy cycloaliphatique, une résine époxy bisphénol-A, ou une autre résine époxy novolaque ; et/ou bien où le composant (ii) comprend une résine époxy multifonctionnelle dérivée de la polyaddition d'un composant dicyclopentadiène et d'un composant phénol.

3. Une composition selon la revendication 1 ou la revendication 2, où la composition comprend en outre un composant (iv) comprenant au moins une résine époxy difonctionnelle ;
et/ou bien où la composition comprend en outre un composant (v) comprenant un modificateur d'impact ;
et/ou bien où la composition comprenant un composant (vi) comprenant une charge.

4. Une composition selon n'importe lesquelles des revendications précédentes, où la plage de poids équivalents époxy moyens du composant (i) est dans la plage allant de 120 à 220, de préférence de 150 à 210, plus préférablement de 150 à 200.

5. Une composition selon n'importe lesquelles des revendications précédentes, où le mélange de composants à fonction époxy (i) et (ii) comprend un rapport stœchiométrique de poids équivalents époxy moyens de i) à ii) allant de de 0,86 à 1,29, de préférence dans la plage allant de à 1,183 à 0,864 et plus préférablement de 1,022 à 1,13.

6. Une composition selon n'importe lesquelles des revendications précédentes, où la composition comprend le premier composant (i) dans la plage allant de 5 à 30 % en poids rapporté au poids total de la composition, de préférence de 12 à 25 % en poids rapporté au poids total de la composition.

7. Une composition selon n'importe lesquelles des revendications précédentes, où la composition comprend le deuxième composant (ii) dans la plage allant de 5 à 20 % en poids rapporté au poids total de la composition, de préférence de 8 à 10 % en poids rapporté au poids total de la composition ;
et/ou bien où le composant (iii) est dans la plage allant de 12 à 20 % en poids rapporté au poids total de la composition.

8. Une composition selon n'importe lesquelles des revendications précédentes, où la composition comprend un ou plusieurs composants de résine époxy difonctionnelle dans la plage allant de 20 à 55 % en poids rapporté au poids total de la composition.

9. Une composition selon n'importe lesquelles des revendications précédentes, où le durcisseur à base d'hydrazide est un durcisseur dihydrazide et où de préférence le durcisseur à base d'urone (a) est choisi parmi les phénylurées ; et/ou bien où le durcisseur à base d'urone est choisi parmi la 1,3-diphénylurée, la benzylurée, la 1,1-diméthyl-3-phénylurée, la N-éthylurée, la N-(2-chloro-4-pyridyl)-N'-phénylurée, la N,N'-dibenzylurée, la N-(4-chlorophényl)-N,N-diméthylurée, la N-(4-chlorophényl)-n,n-diméthylurée, la N-phényl-N,N-diméthylurée, la 2,4-toluène bis(diméthylurée), la 2,6-toluène bis(diméthylurée), la bisurée cycloaliphatique, la toluène bis(diméthylurée), la 4,4'-méthylène bis(phényldiméthylurée), la N,N-diméthyl-N'-[3-(trifluorométhyl)phényl]-urée, la 3-(3,4-dichlorophényl)-1,1-diméthylurée et/ou des combinaisons des urées susmentionnées.

10. Un matériau de moulage comprenant une matrice de résine comprenant la composition telle que définie dans n'importe lesquelles des revendications précédentes et un matériau de renforcement fibreux.

11. Un adhésif comprenant une composition telle que définie dans n'importe lesquelles des revendications 1 à 9 en combinaison avec au moins une charge.
